# EUROPÄISCHE PATENTSCHRIFT

(11) **EP 1 525 123 B1**
(45) Veröffentlichungstag und Bekanntmachung des Hinweises auf die Patenterteilung: **15.08.2007**
(21) Anmeldenummer: 03784013.9
(22) Anmeldetag: 12.07.2003
(51) Int. Cl.: B60R 22/46

(54) **GURTAUFROLLER-GURTSTRAFFER-KOMBINATION MIT IN DIE GURTWELLE INTERGRIERTEM STRAFFERANTRIEB**
BELT RETRACTOR/BELT TENSIONER COMBINATION COMPRISING A BELT SHAFT-INTEGRATED TENSIONING DRIVE
COMBINE ENROULEUR DE CEINTURE-PRETENSIONNEUR DE CEINTURE COMPRENANT UNE COMMANDE DE PRETENSIONNEUR INTEGREE DANS L'ARBRE DE CEINTURE

(30) Priorität: 03.08.2002 DE 10235543
(43) Veröffentlichungstag der Anmeldung: 27.04.2005
(73) Patentinhaber: AUTOLIV DEVELOPMENT AB, 447 83 Vargarda (SE)
(72) Erfinder: JABUSCH, Ronald, 25336 Elmshorn (DE)
(74) Vertreter: Müller, Karl-Ernst
(86) Internationale Anmeldenummer: PCT/EP2003/007554
(87) Internationale Veröffentlichungsnummer: WO 2004/014704

(56) Entgegenhaltungen:
- EP-A- 0 919 747
- EP-A- 0 940 307
- DE-A- 19 602 549
- DE-A- 19 609 524
- US-A- 5 788 176
- US-A- 6 065 706
- US-A1- 2001 006 204

## Beschreibung

Die Erfindung betrifft einen selbstsperrenden Sicherheitsgurtaufroller mit einem gurtbandsensitiv und/oder fahrzeugsensitiv ansteuerbaren Blockierelement zur Blockierung der Drehung der Gurtwelle in Gurtabwickelrichtung und mit einer auf die Gurtwelle einwirkenden, die Gurtwelle bei Auslösung in Aufwickelrichtung des Sicherheitsgurtes drehenden Strafferantrieb.

Ein Sicherheitsgurtaufroller mit den gattungsgemäßen Merkmalen ist in der DE 196 09 524 A1 beschrieben. Hierbei ist der Strafferantrieb als pyrotechnischer Seilstraffer ausgebildet, der bei Auslösung eine Antriebsscheibe in Drehung versetzt. Die Antriebsscheibe ist über eine Fliehkraftkupplung in Form einer bei Drehbeschleunigung radial auslenkbaren Strammerklinke mit der Gurtwelle kuppelbar, so dass die Drehbewegung der Antriebsscheibe in Gurtaufwickelrichtung auf die Gurtwelle übertragbar ist.

Soweit am Ende des Straffvorganges aufgrund der einsetzenden Vorverlagerung eines angeschnallten Insassen eine Drehung der Gurtwelle in Gurtauszugsrichtung erfolgt, die durch das aufrollerseitige Blockierelement zu unterbinden ist, ist mit der bekannten Ausgestaltung der Nachteil verbunden, dass es für die Einsteuerung des Blockierelementes nach Abschluss der Strammbewegung eines bestimmten Drehweges der Gurtwelle in Gurtauszugsrichtung bedarf, bevor das Blockierelement eingesteuert und der weitere Gurtbandauszug blockiert ist. Als weitere Nachteile sind zu nennen, dass die Ausbildung einer gesonderten Kupplung zwischen Gurtwelle und Strafferantrieb aufwändig ist und schließlich die Anordnung des Strafferantriebs am Gehäuse des Gurtaufrollers und deren feste Verbindung miteinander einen entsprechenden Raumbedarf mit sich bringt.

Der Erfindung liegt daher die Aufgabe zugrunde, bei einem selbstsperrenden Sicherheitsgurtaufroller der eingangs genannten Art insbesondere den für die Blockierung der Gurtwelle nach Abschluss der Straffbewegung erforderlichen Umsteuerweg bis zum Eingriff des Blockierelementes zu verkürzen und auch im übrigen die Gurtaufroller-Gurtstraffer-Kombination in ihrer Baugröße zu reduzieren.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, dass der zwei bei seiner Auslösung eine Relativbewegung zueinander ausführende Bauteile aufweisende Strafferantrieb ohne eine Verbindung zum Gehäuse des Gurtaufrollers an der Gurtwelle angeordnet ist und sich vor seiner Auslösung gemeinsam mit der Gurtwelle dreht, und dass das Blockierelement an dem bei Auslösung des Strafferantriebs zunächst eine Drehung in Gurtabwickelrichtung ausführenden ersten Bauteil gehaltert ist und durch die Bewegung des ersten Bauteils in seine Blockierstellung eingesteuert wird und die Gurtwelle mit dem anderen, aufgrund des Einwirkens der Antriebskraft bei festgesetztem ersten Bauteil sich in Gurtaufwickelrichtung drehenden zweiten Bauteil des Strafferantriebes verbunden ist, wobei zwischen erstem und zweitem Bauteil des Strafferantriebs eine in Gurtauszugsrichtung ständig wirksame und in Gurtaufwickelrichtung einen Freilauf bildende. Rücklaufsperre angeordnet ist. Somit besteht ein wesentliches Merkmal der Erfindung darin, dass der gesamte Strafferantrieb in die Gurtwelle integriert ist, wobei zur Einleitung der Straffbewegung der Gurtwelle auf das ohnehin vorhandene Blockiersystem des Gurtaufrollers mit dem bei Normalbetrieb des Gurtaufrollers fahrzeugsensitiv und/oder gurtbandsensitiv angesteuerten Blockierelement zurückgegriffen wird. Somit ist eine gesonderte Kupplung zwischen Strafferantrieb und Gurtwelle nicht mehr erforderlich.

Während bei Strafferantrieben üblicherweise durch die Einwirkung der Straffenergie, beispielsweise eines pyrotechnisch erzeugten Gases oder auch einer elektrischen Energie, ein mit der Gurtwelle gekuppeltes bewegliches Bauteil wie Kolben oder Rotor relativ zu einem feststehenden, mit dem Gurtaufrollergehäuse verbundenen Gehäuse des Strafferantriebes bewegt wird, besteht die Besonderheit der erfindungsgemäßen Gurtaufroller-Gurtstraffer-Kombination weiterhin darin, dass das bei Beginn des Straffvorganges in Gurtauszugsrichtung bewegte Bauteil des Strafferantriebes über das an ihm gelagerte Blockierelement gehäusefest verriegelt und somit das Widerlager für die anschließende Relativbewegung im Sinne einer Rückdrehung des "Gehäuses" als zweitem Bauteil des Strafferantriebes in Gurtaufwickelrichtung bildet. Insofern ändert sich während des Straffvorganges die Funktion der beiden Bauteile des Strafferantriebes, weil das erste Bauteil von einem bewegten Bauteil in ein feststehendes Bauteil und das zweite Bauteil von einem zunächst quasi feststehenden Bauteil in das die Straffbewegung vermittelnde Bauteil übergeht.

Als zusätzliches Bauteil ist dabei lediglich die zwischen erstem und zweitem Bauteil des Strafferantriebes in Gurtabwickelrichtung ständig wirksame Rücklaufsperre vorgesehen, die nach Abschluss der Straffbewegung eine Rückdrehung der Gurtwelle in Gurtauszugsrichtung verhindert. Da die ständig wirksame Rücklaufsperre keinen An- bzw. Umsteuerweg benötigt, ist die Gurtwelle am Ende des Straffvorganges wegen des weiterhin bestehenden Eingriffs des Blockierelementes in eine gehäusefeste Verzahnung unmittelbar in Gurtauszugsrichtung blockiert.

Somit ergibt sich als weiterer Vorteil der Erfindung, dass eine feste Verbindung zwischen dem Strafferantrieb und dem Gehäuse des Gurtaufrollers nicht besteht. Damit ergibt sich eine Einsparung von Bauraum und zusätzlichen Bauteilen, und auch zusätzlich einzurichtende Kraftflüsse sind vermieden, weil auf die am Gurtaufroller bestehenden Kraftflusswege zurückgegriffen wird.

Nach einem Ausführungsbeispiel der Erfindung ist vorgesehen, dass die Rücklaufsperre als Ratschensperre mit einer bei Drehung in Gurtaufwickelrichtung über eine Verzahnung hinwegratschenden Sperrklinke ausgebildet ist; hierdurch ist gewährleistet, dass die Sperrklinke ständig in einer die Drehung der Gurtwelle in Gurtauszugsrichtung verhindernden Eingriff mit der Verzahnung steht, so dass auch im Normalbetrieb des Gurtaufrollers nach der gurtbandsensitiv bzw. fahrzeugsensitiv angesteuerten Blockierung des Blockierelementes der Kraftfluss über den Strafferantrieb und die zwischengeschaltete Rücklaufsperre erfolgt.

Nach einem ersten Ausführungsbeispiel der Erfindung ist vorgesehen, dass der Strafferantrieb als Elektromotor mit einem den Wellenkörper als Träger des Gurtbandes bildenden Stator als zweitem Bauteil und mit einem das Blockierelement halternden Rotor als erstem Bauteil ausgebildet ist. Hierbei dient der Stator unmittelbar als Wellenkörper, auf den das Gurtband des Sicherheitsgurtaufrollers aufgewickelt ist. Bei unbestromtem Elektromotor drehen sich Stator und Rotor jeweils gemeinsam, wobei im Falle einer gurtbandsensitiv bzw. fahrzeugsensitiv gesteuerten Auslenkung des an dem Rotor gelagerten Blockierelements in dessen Blockierstellung aufgrund der in Gurtauszugsrichtung ständig wirksamen Rücklaufsperre eine Blockierung auch der Drehbewegung des Stators als Wellenkörper in Gurtauszugsrichtung gegeben ist.

Soweit ein gattungsgemäßer Sicherheitsgurtaufroller wie in der zur Bildung der Gattung herangezogenen DE 196 09 524 A1 ebenfalls beschrieben mit einer als Torsionsstab ausgebildeten Kraftbegrenzungseinrichtung versehen ist, ist hierzu vorgesehen, dass der Torsionsstab im Inneren des Rotors angeordnet und an seinem einen Ende formschlüssig mit einem Profilkopf als Träger des daran gehalterten Blockierelementes und an seinem gegenüberliegenden Ende formschlüssig mit dem Rotor verbunden ist. In diesem Fall ist der Stator als Wellenkörper über Sollbruchgestaltungen unmittelbar mit dem das Blockierelement tragenden Profilkopf verbunden, so dass in an sich bekannter Weise über diesen Weg die Blockierung der Gurtwelle im Normalbetrieb des Gurtaufrollers erfolgt.

In einer alternativen Ausführungsform der Erfindung ist vorgesehen, dass der Strafferantrieb als pyrotechnischer Antrieb mit einem das Gurtband tragenden Wellenkörper verbundenen Gehäuse als zweitem Bauteil und mit wenigstens einem in dem Gehäuse angeordneten, auf eine axiale Antriebswelle als Träger des Blockierelementes einwirkenden und von dem bei Auslösung des Strafferantriebes von einem Gasgenerator erzeugten Gas angeströmten Antriebsteil als erstem Bauteil ausgebildet ist. Hierzu ist nach einem ersten Ausführungsbeispiel der Erfindung das Antriebsteil von einem von dem Gas angeströmten Kolben gebildet, wobei aus Gründen einer symmetrischen Kraftübertragung im Auslösefall vorgesehen sein kann, dass zu beiden Seiten der Antriebswelle in symmetrischer Anordnung jeweils ein Kolben vorgesehen ist. Während bei einem herkömmlichen pyrotechnischen Antrieb wie in der gattungsbildenden DE 196 09 524 A1 beschrieben die Bewegung des Kolbens gegenüber dem Gehäuse des Strafferantriebes in die Aufwickelbewegung der Gurtwelle umgesetzt wird, wird bei dieser erfindungsgemäßen Ausführungsform die anfängliche Bewegung des Kolbens lediglich dazu ausgenutzt, das über die zwischengeschaltete Antriebswelle mit dem Kolben gekoppelte Blockierelement in dessen Blockierstellung auszulenken. Danach ist der Kolben des Strafferantriebes festgelegt, und die weitere Einwirkung des von dem Gasgenerator erzeugten Gases führt zu einer Drehung des mit dem Wellenkörper verbundenen Gehäuses des Strafferantriebes.

Zur Umsetzung der Antriebsbewegung des Kolbens in die Drehbewegung der das Blockierelement halternden Antriebswelle kann nach alternativen Ausführungsbeispielen der Erfindung vorgesehen sein, dass Antriebswelle und Kolben über ineinandergreifende Verzahnungen miteinander gekoppelt sind derart, dass die Linearbewegung des Kolbens bei Auslösung des Strafferantriebes in eine Drehbewegung der Antriebswelle umgesetzt wird oder dass auf der Antriebswelle ein über den Kolben geführtes Band aufgewickelt und an dem Gehäuse befestigt ist derart, dass die lineare Kolbenbewegung eine Abwicklung des Bandes von der Antriebswelle und damit eine Drehung des Gehäuses gegenüber der festgesetzten Antriebswelle herbeiführt.

Soweit das Antriebsteil durch ein Zusammenwirken von Kolben und Band gebildet ist, kann nach einem Ausführungsbeispiel der Erfindung auf den Kolben verzichtet sein, so dass das Band unmittelbar angeströmt wird. Hierzu ist im einzelnen vorgesehen, dass auf der Antriebswelle ein Band aufgewickelt und unter Bildung einer in Anströmrichtung des Gases vorgewölbten Kammer dicht an dem Gehäuse befestigt ist derart, dass die Anströmung des Bandes eine Abwicklung des Bandes von der Antriebswelle und damit eine .Drehung des Gehäuses gegenüber der festgesetzten Antriebswelle herbeiführt.

Auch bei diesen Ausführungsbeispielen der Erfindung mit einem pyrotechnischen Antrieb ist die Integration eines Torsionsstabes als an sich bekannte Kraftbegrenzungseinrichtung möglich, indem die Antriebswelle als innenliegender Torsionsstab ausgebildet ist, der an seinem dem Strafferantrieb zugeordneten Ende von dem Kolben angetrieben wird und an seinem gegenüberliegenden Ende mit einem Profilkopf als Träger des Blockierelementes verbunden ist, wobei der Wellenkörper über Sollbruchgestaltungen mit dem Profilkopf verbunden ist.

In vorteilhafter Weise kann hierbei vorgesehen sein, dass der Gasgenerator an einer feststehenden Kappe des Sicherheitsgurtaufrollers angeordnet ist und mit seinem Gasauslassbereich in einen in dem Gehäuse des Strafferantriebes ausgebildeten Gasverteilungsraum hineinragt.

In der Zeichnung sind Ausführungsbeispiele der Erfindung wiedergegeben, welche nachstehend beschrieben sind. Es zeigen:
- Fig. 1: einen Sicherheitsgurtaufroller mit integriertem, als Elektromotor ausgebildeten Strafferantrieb in einer schematischen Seitenansicht,
- Fig. 2: den Sicherheitsgurtaufroller entsprechend Figur 1 mit einem integrierten Torsionsstab,
- Fig. 3: den Sicherheitsgurtaufroller mit als pyrotechnischem Antrieb ausgebildetem Strafferantrieb in einer schematischen Seitenansicht,
- Fig. 4: das Gehäuse des Strafferantriebes mit Kolbenanordnung zu Beginn der Auslösung des Strafferantriebes in einer schematischen Stirnansicht,
- Fig. 5: den Gegenstand der Figur 4 während des Straffvorganges.

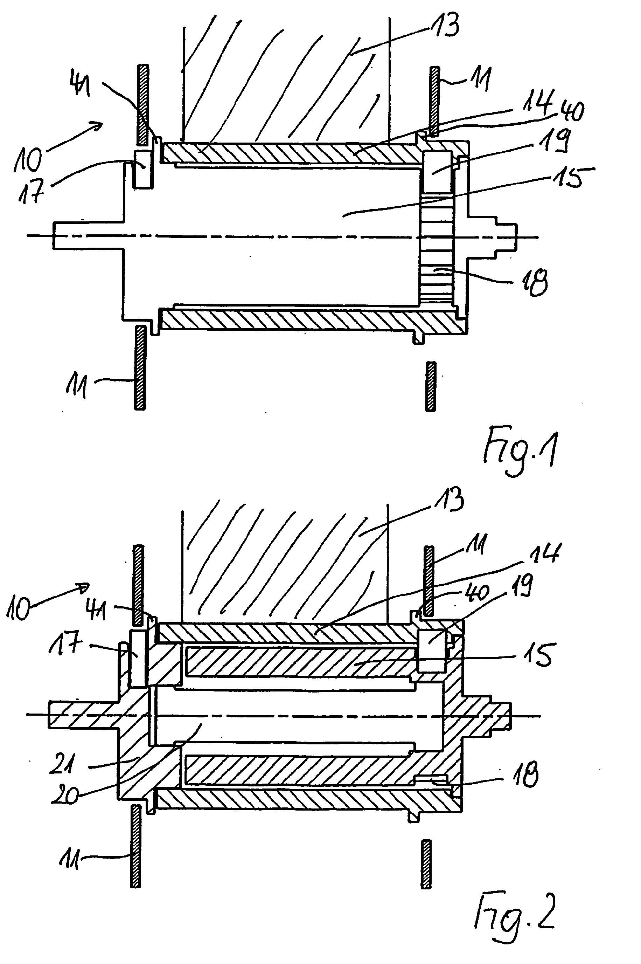

Die in Figur 1 schematisch dargestellte Gurtaufroller-Gurtstraffer Kombination weist ein U-förmiges Gehäuse 10 auf, in dessen Seitenschenkeln 11 ein Wellenkörper gelagert ist, auf dem ein mit 13 angedeutetes Gurtband aufgewickelt ist. Soweit bei dem in Figur 1 dargestellten Ausführungsbeispiel der Strafferantrieb als Elektromotor ausgebildet ist, dient als das Gurtband 13 tragender Wellenkörper der Stator 14 des Elektromotors, der auf der einen, im Ausführungsbeispiel der Figur 1 rechten Seite des Wellenkörpers an einem Flansch 40 die Wellenlagerung in dem zugeordneten Seitenschenkel 11 des Gehäuses 10 bildet. Im Inneren des Stators 14 ist der dem Elektromotor zugehörige Rotor 15 angeordnet, der an seinem, dem Flansch 40 gegenüberliegenden Ende über den Stator 14 hinaussteht und mit einem dort ausgebildeten Flansch 41 die andere Lagerstelle für die Gurtwellenlagerung bildet. Stirnseitig ist an dem Rotor 15 ein Blockierelement 17 gelagert, dass in Eingriff mit einer in dem Seitenschenkel 11 ausgebildeten Verzahnung aussteuerbar ist derart, dass bei ausgesteuertem Blockierelement 17 die Drehung des Rotors 15 gegenüber dem Gehäuse 10 blockiert ist. Wie nicht weiter dargestellt und im übrigen aus dem einschlägigen Stand der Technik bekannt, unterliegt das Blockierelement 17 einer gurtbandsensitiven bzw. fahrzeugsensitiven Ansteuerung beim Normalbetrieb des Sicherheitsgurtaufrollers. Zwischen dem Rotor 15 und dem Stator 14 ist weiterhin eine Rücklaufsperre mit einer an dem Stator 14 gelagerten und in Gurtauszugsrichtung in ständigem Eingriff mit einer an dem Rotor 15 ausgebildeten Verzahnung 18 gehaltenen Sperrklinke 19 ausgebildet, die als Freilauf eine. Relativdrehung von. Stator 14 und Rotor 15 in Gurtaufwickelrichtung zulässt.

Im Normalbetrieb des Gurtaufrollers folgen Stator 14 und Rotor 15 den durch die Aufwickel- bzw. Abwickelbewegung des Gurtbandes vermittelten Drehbewegung des Wellenkörpers; falls aufgrund des fahrzeugsensitiven bzw. gurtbandsensitiven Steuersystems eine Auslenkung des an dem Rotor 15 gelagerten Blockierelementes 17 erfolgt, wird der Rotor 15 in seiner Drehbewegung in Gurtauszugsrichtung festgelegt, und aufgrund der ebenfalls in Gurtauszugsrichtung wirksamen Rücklaufsperre 18, 19 ist auch der Stator 14 als Wellenkörper blockiert, so dass die Gurtauszugsbewegung des Gurtbandes 13 verhindert ist.

Kommt es nun zu einer Auslösung des Strafferantriebes, so führt die Bestromung des Elektromotors zunächst zu einer Drehung des Rotors 15 in Gurtauszugsrichtung, und durch diese Drehung wird das Blockierelement 17 in die zugeordnete Verzahnung des Seitenschenkels 11 eingesteuert. Ist der Rotor 15 in seiner Drehrichtung festgelegt, führt die Bestromung des Elektromotors dazu, dass sich der Stator 14 mit einer entgegengesetzten Drehrichtung, also in Gurtaufwickelrichtung (Pfeil 36) relativ zum festgelegten Rotor 15 dreht, wobei in dieser Relativ-Drehrichtung als Freilauf die Sperrklinke 19 über die Verzahnung 18 hinwegratscht. Nach Beendigung des Straffvorganges ist bei einem anschließenden Gurtbandauszug der Stator 14 als Wellenkörper über die sofort wirksame Rücklaufsperre 18, 19 an den weiterhin durch den Eingriff des Blockierelementes 17 festgelegten Rotor 15 gekoppelt, so dass kein Gurtbandauszug möglich ist.

Bei dem in Figur 2 dargestellten Ausführungsbeispiel ist zusätzlich in den Strafferantrieb ein Torsionsstab 20 integriert, der im Inneren des Rotors 15 angeordnet ist und an seinem in der Darstellung der Figur 2 rechten Ende formschlüssig mit dem Rotor 15 verbunden ist. An dem gegenüberliegenden in der Darstellung der Figur 2 linken Ende ist der Torsionsstab 20 formschlüssig mit einem gesonderten Profilkopf 21 als Träger des Blockierelementes 17 verbunden, wobei der Profilkopf 21 gegenüber dem Rotor 15 abgesetzt ist und in einer nichtdargestellten, jedoch aus der gattungsbildenden DE 196 02 549 A1 grundsätzlich bekannten Weise über Sollbruchgestaltungen, beispielsweise in Form von Scherstiften, mit dem Stator 14 als Wellenkörper verbunden ist.

Die Funktion des in Figur 2 dargestellten Ausführungsbeispiels ist bezüglich des Normalbetriebes des Gurtaufrollers wie auch des Strammvorganges gleich der zu Figur 1 beschriebenen Funktionsweise. Kommt es im Normalbetrieb aufgrund der fahrzeugsensitiven oder gurtbandsensitiven Ansteuerung des Blockierelementes zu dessen Auslenkung in die Blockierstellung, wird der Profilkopf 21 in seiner Drehung in Gurtauszugsrichtung festgelegt. Aufgrund der Verbindung des Profilkopfes 21 zu dem den Wellenkörper bildendenden Stator 14 über die nicht dargestellten Sollbruchgestaltungen ist auch der Stator 14 in Gurtauszugsrichtung blockiert. Wird der Elektromotor als Strafferantrieb angesteuert, vollzieht sich der Straffvorgang in gleicher Weise wie zu Figur 1 beschrieben, wobei nach Einsteuerung des Blockierelementes 17 zu Beginn des Straffvorganges mit Beginn der "Rückdrehung" des Stators 14 in Aufwickelrichtung die Verbindung zwischen Profilkopf 21 und Stator 14 als Wellenkörper durch Zerstörung der Sollbruchgestaltungen aufgehoben wird. Kommt es am Ende des Straffvorganges zu einer Drehrichtungsumkehr an dem den Wellenkörper bildenden Stator 14, wird aufgrund der Rücklaufsperre die Drehung des Stators 14 in Gurtauszugsrichtung in eine Drehung des Rotors 15 mit gleicher Drehrichtung umgesetzt, wobei nun eine Relativdrehung des Rotors 15 gegenüber dem durch das Blockierelement 17 weiterhin festgelegten Profilkopf 21 erfolgt, und diese Relativdrehung führt zu einer entsprechenden kraftbegrenzenden Beanspruchung des zwischen Profilkopf 21 und Rotor 15 geschalteten Torsionsstabes 20.

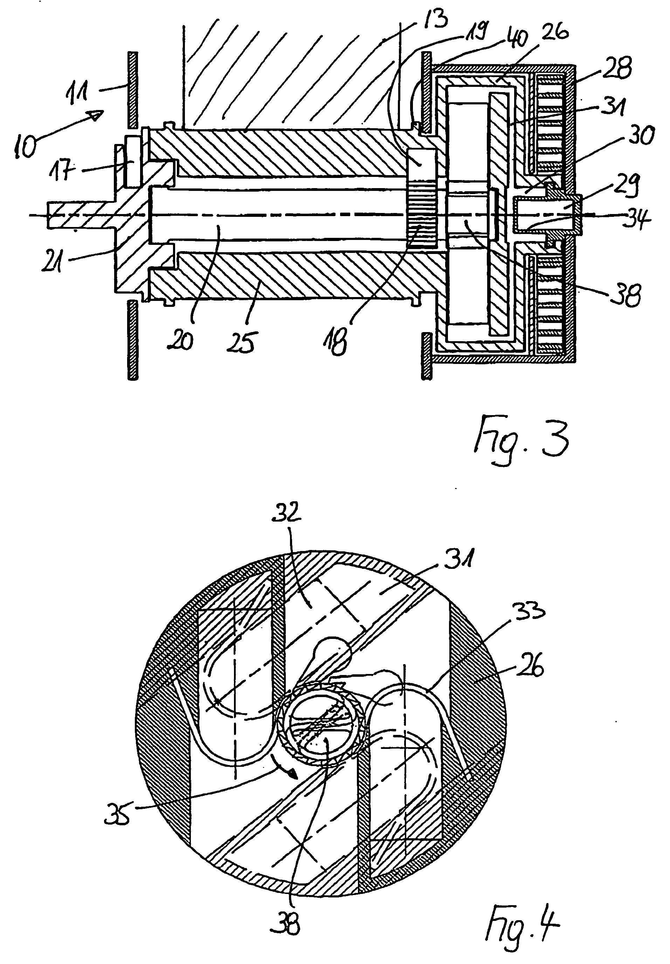

Bei dem in den Figuren 3 bis 5 dargestellten Ausführungsbeispiel ist der Strafferantrieb als pyrotechnischer Antrieb ausgebildet, wobei in diesem Ausführungsbeispiel ebenfalls ein Torsionsstab als Kraftbegrenzungseinrichtung integriert ist. Dieses Ausführungsbeispiel lässt sich allerdings auch ohne einen Torsionsstab verwirklichen.

Der pyrotechnische Antrieb besteht dabei aus einem Gehäuse 26, welches einstückig mit einem Wellenkörper 25 als Träger des Gurtbandes 13 verbunden ist, so dass sich das Gehäuse 26 jeweils mit dem Wellenkörper 25 dreht. Der Wellenkörper 25 ist dabei in gleicher Weise wie zu dem Stator bei dem Ausführungsbeispiel gemäß Figuren 1 und 2 beschrieben mittels eines Flansches 40 an dem zugehörigen Seitenschenkel 11 des Gehäuses 10 gelagert. Das Gehäuse 26 ist übergriffen von einer an dem Seitenschenkel 11 angebrachten Gehäusekappe 28, an deren Stirnseite ein Gasgenerator 29 feststehend angeordnet ist. Der Gasgenerator 29 ragt mit einem Gasauslassbereich 34 in das Gehäuse 26 hinein, welches in diesem Bereich einen Gasverteilungsraum 30 ausbildet.

Zwischen dem Gehäuse 26 und der Gehäusekappe 28 ist eine Aufwickelfeder 37 angeordnet, die mit ihrem äußeren Ende an der Gehäusekappe und mit ihrem inneren Ende an dem Gehäuse 26 eingehängt ist, so dass die Aufwickelfeder 37 in an sich bekannter Weise für die Rückdrehung des Wellenkörpers 25 mit Gehäuse 26 sorgt.

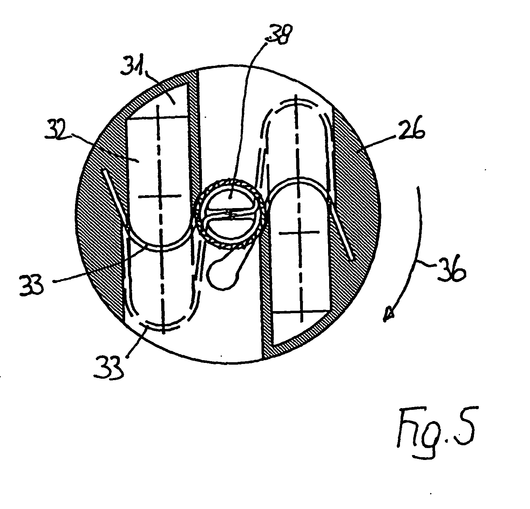

Wie sich aus einer Zusammenschau der Figuren 4 und 5 ergibt, sind innerhalb des Gehäuses 26 zwei Kolben 32 längsverschiebbar angeordnet, zu denen von dem Gasverteilungsraum 30 Gaskanäle 31 führen, so dass das im Auslösefall von dem Gasgenerator 29 erzeugte Gas die Kolben 32 antreibt. Dabei wirken die Kolben 32 in einer noch.zu beschreibenden Weise auf einen Ansatz 38 des in Übereinstimmung mit dem Ausführungsbeispiel zu Figuren 1 und 2 bereits beschriebenen und im Inneren des Wellenkörpers 25 angeordneten Torsionsstabes 20 zusammen. An dem gegenüberliegenden Ende ist an den Torsionsstab 20 wie beschrieben ein Profilkopf 21 mit dem daran gelagerten Blockierelement 17 angeschlossen.

Wenn die vorstehend beschriebene Gurtaufroller-Gurtstraffer-Kombination mit dem pyrotechnischen Strafferantrieb ohne die Einschaltung eines Torsionsstabes ausgebildet ist, kann anstelle des Torsionsstabes eine axiale Antriebswelle vorgesehen sein, an welcher das Blockierelement 17 gelagert ist, so dass die Antriebsbewegung der Kolben 32 über die anstelle des Torsionsstabes 20 vorgesehene Antriebswelle zu dem Blockierelement 17 übertragbar ist.

Wie aus den Figuren 4 und 5 ersichtlich ist, strömt im Auslösefall das von dem Gasgenerator 29 erzeugte Gas über die Gaskanäle 31 zu den Kolben 32, die zunächst eine Drehung des Torsionsstabes 20 in die mit Pfeil 35 gekennzeichnete Gurtauszugsrichtung herbeiführen. Diese Drehung führt, wie beschrieben, zu einer Verriegelung des anderen Endes des Torsionsstabes 20 über den Profilkopf 21 und das daran gelagerte Blockierelement 17. Ist der Torsionsstab 20 bzw. dessen Ansatz 38 festgelegt, führt der weiterhin einwirkende Gasdruck zu einer Drehung des Gehäuses 26 in die mit Pfeil 36 bezeichnete Aufwickelrichtung des Gehäuses 26 sowie des damit verbundenen Wellenkörpers 25, indem jeweils ein auf dem Ansatz 38 des Torsionsstabes 20 aufgewickeltes und von hier aus über den jeweiligen Kolben 32 geführtes sowie an dem Gehäuse 26 befestigtes Band 33 abgewickelt wird. Gemäß einer Art Rückstoßprinzip ergibt sich daraus eine entsprechende Drehung des Gehäuses 26. Bei dieser Drehung des Gehäuses 26 mit Wellenkörper 25 in Gurtaufwickelrichtung ratscht die an dem Wellenkörper 25 entsprechend vorgesehene Sperrklinke 19 der Rücklaufsperre über die an dem Torsionsstab 20 entsprechend ausgebildete Verzahnung 18 hinweg, so dass nach Abschluss der Straffbewegung der Wellenkörper 25 unmittelbar in Gurtauszugsrichtung blockiert ist.

Wie nicht weiter dargestellt kann bei dem in den Figuren 3 bis 5 dargestellten Ausführungsbeispiel auch auf die Anordnung des Kolbens 32 verzichtet sein; für die Antriebsbewegung reicht es aus, das Band 33 in Form einer in Anströmrichtung des Gases vorgewölbten Kammer dicht an dem Gehäuse 26 zu befestigen; strömt das Gas in die Kammer ein und beaufschlagt das Band 33 unmittelbar, so kommt es entsprechend zu einer Drehbewegung des Torsionsstabes 20.

Die in der vorstehenden Beschreibung, den Patentansprüchen, der Zusammenfassung und der Zeichnung offenbarten Merkmale des Gegenstandes dieser Unterlagen können sowohl einzeln als auch in beliebigen Kombinationen untereinander für die Verwirklichung der Erfindung in ihren verschiedenen Ausführungsformen wesentlich sein.

## Patentansprüche

1. Selbstsperrender Sicherheitsgurtaufroller mit einem gurtbandsensitiv und/oder fahrzeugsensitiv ansteuerbaren Blockierelement (17) zur Blockierung der Drehung der Gurtwelle in Gurtabwickelrichtung und mit einem auf die Gurtwelle einwirkenden, die Gurtwelle bei Auslösung in Aufwickelrichtung des Sicherheitsgurtes (13) drehenden Strafferantrieb, **dadurch gekennzeichnet, dass** der zwei bei seiner Auslösung eine Relativbewegung zueinander ausführende Bauteile (14,15;26,32) aufweisende Strafferantrieb ohne eine Verbindung zum Gehäuse (10) des Gurtaufrollers an der Gurtwelle angeordnet ist und sich vor seiner Auslösung gemeinsam mit der Gurtwelle dreht, und dass das Blockierelement (17) an dem bei Auslösung des Strafferantriebs zunächst eine Drehung in Gurtabwickelrichtung ausführenden ersten Bauteil (15;20,31) gehaltert ist und durch die Bewegung des ersten Bauteils in seine Blockierstellung eingesteuert wird und die Gurtwelle mit dem anderen, aufgrund des Einwirkens der Antriebskraft bei festgesetztem ersten Bauteil sich in Gurtaufwickelrichtung drehenden zweiten Bauteil (15;26) des Strafferantriebes verbunden ist, wobei zwischen erstem und zweitem Bauteil (14,15;26,20,32) des Strafferantriebs eine in Gurtauszugsrichtung ständig wirksame und in Gurtaufwickelrichtung einen Freilauf bildende Rücklaufsperre (18,19) angeordnet ist.

2. Sicherheitsgurtaufroller nach Anspruch 1, **dadurch gekennzeichnet, dass** die Rücklaufsperre als Ratschensperre mit einer bei Drehung in Gurtaufwickelrichtung über eine Verzahnung (18) hinwegratschenden Sperrklinke (19) ausgebildet ist.

3. Sicherheitsgurtaufroller nach Anspruch 1 oder 2, **dadurch gekennzeichnet, dass** der Strafferantrieb als Elektromotor mit einem den Wellenkörper als Träger des Gurtbandes (13) bildenden Stator (14) als zweitem Bauteil und mit einem das Blockierelement (17) halternden Rotor (15) als erstem Bauteil ausgebildet ist.

4. Sicherheitsgurtaufroller nach Anspruch 3 mit einer als Torsionsstab ausgebildeten Kraftbegrenzungseinrichtung, **dadurch gekennzeichnet, dass** der Torsionsstab (20) im Inneren des Rotors (15) angeordnet und an seinem einen Ende formschlüssig mit einem Profilkopf (21) als Träger des daran gehalterten Blockierelementes (17) und an seinem gegenüberliegenden Ende formschlüssig mit dem Rotor (15) verbunden ist, wobei der Rotor (14) mit dem Profilkopf (21) über Sollbruchgestaltungen verbunden ist.

5. Sicherheitsgurtaufroller nach Anspruch 1 oder 2, **dadurch gekennzeichnet, dass** der Strafferantrieb als pyrotechnischer Antrieb mit einem mit einem Wellenkörper (25) als Träger des Gurtbandes (13) verbundenen Gehäuse (26) als zweitem Bauteil und mit wenigstens einem in dem Gehäuse (26) angeordneten, auf eine axiale Antriebswelle als Träger des Blockierelementes (17) einwirkenden und von dem bei Auslösung des Strafferantriebes von einem Gasgenerator (29) erzeugten Gas angeströmten Antriebsteil als erstem Bauteil ausgebildet ist.

6. Sicherheitsgurtaufroller nach Anspruch 5, **dadurch gekennzeichnet, dass** das Antriebsteil von einem von dem Gas angeströmten Kolben (32) gebildet ist.

7. Sicherheitsgurtaufroller nach Anspruch 6, **dadurch gekennzeichnet, dass** zu beiden Seiten der Antriebswelle in symmetrischer Anordnung jeweils ein Kolben (32) vorgesehen ist.

8. Sicherheitsgurtaufroller nach Anspruch 6 oder 7, **dadurch gekennzeichnet, dass** Antriebswelle und Kolben (32) über ineinandergreifende Verzahnungen miteinander gekoppelt sind derart, dass die Linearbewegung des Kolbens (32) bei Auslösung des Strafferantriebes in eine Drehbewegung der Antriebswelle umgesetzt wird.

9. Sicherheitsgurtaufroller nach Anspruch 6 oder 7, **dadurch gekennzeichnet, dass** auf der Antriebswelle ein über den Kolben (32) geführtes Band (33) aufgewickelt und an dem Gehäuse (26) befestigt ist derart, dass die lineare Kolbenbewegung eine Abwicklung des Bandes (32) von der Antriebswelle und damit eine Drehung des Gehäuses (26) gegenüber der festgesetzten Antriebswelle herbeiführt.

10. Sicherheitsgurtaufroller nach Anspruch 5, **dadurch gekennzeichnet, dass** auf der Antriebswelle ein Band (33) aufgewickelt und unter Bildung einer in Anströmrichtung des Gases vorgewölbten Kammer dicht an dem Gehäuse (26) befestigt ist derart, dass die Anströmung des Bandes (33) eine Abwicklung des Bandes (32) von der Antriebswelle und damit eine Drehung des Gehäuses (26) gegenüber der festgesetzten Antriebswelle herbeiführt.

11. Sicherheitsgurtaufroller nach einem der Ansprüche 5 bis 10 mit einer als Torsionsstab ausgebildeten Kraftbegrenzungseinrichtung, **dadurch gekennzeichnet, dass** die Antriebswelle als innenliegender Torsionsstab (20) ausgebildet ist, der an seinem dem Strafferantrieb zugeordneten Ende von dem Antriebsteil angetrieben wird und an seinem gegenüberliegenden Ende mit einem Profilkopf (21) als Träger des Blockierelementes (17) verbunden ist, wobei der Wellenkörper (25) über Sollbruchgestaltungen mit dem Profilkopf (21) verbunden ist.

12. Sicherheitsgurtaufroller nach einem der Ansprüche 5 bis 11, **dadurch gekennzeichnet, dass** der Gasgenerator (29) an einer feststehenden Kappe (28) des Sicherheitsgurtaufrollers angeordnet ist und mit seinem Gasauslassbereich (34) in einen in dem Gehäuse (26) des Strafferantriebes ausgebildeten Gasverteilungsraum (30) hineinragt.

## Claims

1. A self-locking seatbelt retractor with a blocking element (17) that can be triggered in a belt-sensitive and/or vehicle-sensitive manner for blocking the rotation of the belt shaft in the unwinding direction and with a tensioning drive that acts upon the belt shaft and that, upon triggering, rotates the belt shaft in the wind up direction of the security belt (13), **characterized in that** the tensioning drive, which comprises two components (14,15;26,32) that are set into relative movement relative to one another upon the triggering of the tensioning device, is arranged without a connection to the housing (10) of the seatbelt retractor on the belt shaft and rotates in common, before its triggering, with the belt shaft, and that the blocking element (17) is retained on a first component (15;20,31) that, upon triggering of the tensioning drive, initially initiates a rotation in the pull out direction and is, via the movement of the first component, controlled into its blocking position, and the belt shaft is connected with the second component (15;26) of the tensioning drive, which second component is rotated in the wind up by reason of the application of the drive force occurring in connection with the fixedly disposed first component, whereby a reverse movement stop (18,19) is arranged between the first and second components (14,15;26,20,32) of the tensioning drive that is continuously effective in the extension direction and that runs in a free running condition in the wind up direction.

2. A seatbelt retractor according to Claim 1, **characterized in that** the reverse movement stop is configured as a ratchet stop with a latch (19) that moves out of ratchet engagement with a tooth arrangement (18) upon rotation in the wind up direction.

3. A seatbelt retractor according to Claim 1 or 2, **characterized in that** the tensioning drive is configured as an electro-motor whose stator (14) forms the shaft body that acts as a support for the seatbelt (13) in the role of the second component and whose rotor (15) that retains the blocking element (17) is in the role of the first component.

4. A seatbelt retractor according to Claim 3 with a force limiting device configured as a torsion bar, **characterized in that** the torsion bar (20) is arranged in the interior of the rotor (15) and is connected on its one end in a form-fitting manner with a profile head (21) serving as a support for the blocking element (17) retained thereon and is connected on its opposite end in a form-fitting connection with the rotor (15), whereby the rotor (14) is directly connected with the profile head (21) via structures designed to give way at a preset force application.

5. A seatbelt retractor according to Claim 1 or 2, **characterized in that** the tensioning drive is configured as a pyrotechnic drive with a housing (26) connected to a shaft body (25) supporting the belt (13) in the role of the second component and with at least one drive piece arranged in the housing (26) that is effective on a driveshaft acting in the role as a support for the blocking element (17) and is flow-contacted by the gas produced from a gas generator (29) upon the triggering of the tensioning drive in the role of the first component.

6. A seatbelt retractor according to Claim 5, **characterized in that** the drive piece is configured as a piston (32) that is flow-contacted by the gas.

7. A seatbelt retractor according to Claim 6, **characterized in that** the drive piece is configured from a piston (32) respectively arranged on both sides of the drive shaft in a symmetrical arrangement.

8. A seatbelt retractor according to Claim 6 or 7, **characterized in that** the driveshaft and the piston (32) are coupled with one another via meshing teeth in a manner such that the linear movement of the piston (32) is, upon triggering of the tensioning drive, converted into a rotational movement of the driveshaft.

9. A seatbelt retractor according to Claim 6 or 7, **characterized in that** there is wound onto the driveshaft a belt (33) that is guided over the piston (32) and is secured to the housing (26) such that the linear piston movement leads to an unwinding of the belt (32) from the driveshaft and, consequently, leads to a rotation of the housing (26) relative to the fixedly set driveshaft.

10. A seatbelt retractor according to Claim 5, **characterized in that** a belt (33) is wound onto the driveshaft and is closely disposed to the housing (26) by forming a pre-arched chamber, disposed in the path of the flow of the gas, such that the flow-contacting of the belt (33) leads to an unwinding of the belt (32) from the driveshaft and, consequently, a rotation of the housing (26) relative to the fixedly set driveshaft.

11. A seatbelt retractor according to one of the Claims 5-10 with a force limiting device configured as a torsion bar, **characterized in that** the driveshaft is configured as an inner disposed torsion bar (20) that is driven by the drive piece at its end arranged relative to the tensioning drive and is connected at its opposite end with a profile head (21) serving as a support of the blocking element (17), whereby the shaft body (25) is connected with the profile head (21) via structures designed to give way at a preset force application.

12. A seatbelt retractor according to one of the Claims 5-11, **characterized in that** the gas generator (29) is arranged on a fixedly set cover (28) of the seatbelt retractor and extends with its gas exhaust region (34) into a partitioned gas space (30) configured in the housing (26) of the tensioning drive.

## Revendications

1. Enrouleur de ceinture de sécurité autobloquant comportant un élément de blocage (17), qui est apte à être actionné de manière sensible au véhicule et/ou de manière sensible à la sangle et est destiné à bloquer la rotation de l'arbre d'enroulement de la ceinture dans le sens du déroulement de la sangle, et comportant un entraînement du rétracteur, qui agit sur l'arbre d'enroulement et, en cas de déclenchement, fait tourner l'arbre d'enroulement dans le sens d'enroulement de la ceinture de sécurité (13), **caractérisé en ce que** l'entraînement du rétracteur, comportant deux composants (14, 15 ; 26, 32) mobiles l'un par rapport à l'autre lors du déclenchement de celui-ci, est agencé au niveau de l'arbre d'enroulement sans aucune liaison avec le boîtier (10) de l'enrouleur de ceinture de sécurité et, avant son déclenchement, tourne conjointement avec l'arbre d'enroulement, et **en ce que** l'élément de blocage (17) est fixé contre le premier composant (15 ; 20, 31) qui, lors du déclenchement de l'entraînement du rétracteur, effectue d'abord une rotation dans le sens de déroulement de la sangle, et est amené dans sa position de blocage par le mouvement du premier composant, et l'arbre d'enroulement est relié à l'autre composant (15 ; 26) du rétracteur, à savoir le deuxième composant qui, sous l'effet de l'application de la force d'entraînement lorsque le premier composant est fixe, tourne dans le sens d'enroulement de la sangle, sachant qu'entre le premier et le deuxième composant (14, 15 ; 26, 20, 32) de l'entraînement du rétracteur est agencé un dispositif anti-retour (18, 19), agissant en permanence dans le sens de déroulement de la sangle et formant un système de rotation libre dans le sens d'enroulement de la sangle.

2. Enrouleur de ceinture de sécurité selon la revendication 1, **caractérisé en ce que** le dispositif anti-retour est réalisé sous la forme d' un mécanisme à cliquet comportant un cliquet de blocage (19) qui passe sur une denture (18) dans le cas d'une rotation dans le sens d'enroulement de la sangle.

3. Enrouleur de ceinture de sécurité selon la revendication 1 ou 2, **caractérisé en ce que** l'entraînement du rétracteur est réalisé sous forme de moteur électrique comportant un stator (14), formant le corps de l'arbre portant la ceinture de sécurité (13) et constituant le deuxième composant, et un rotor (15) portant l'élément de blocage (17) et constituant le premier composant.

4. Enrouleur de ceinture de sécurité selon la revendication 3 comportant un dispositif de limitation des forces, **caractérisé en ce que** la barre de torsion (20) est montée à l'intérieur du rotor (15) et par l'une de ses extrémités est reliée par conjugaison de forme avec une tête profilée (21), portant l'élément de blocage (17) monté contre celui-ci, et par son extrémité opposée est assemblée par conjugaison de forme avec le rotor (15), le rotor (15) étant assemblé à la tête profilée (21) par l'intermédiaire de structures destinées à la rupture.

5. Enrouleur de ceinture de sécurité selon la revendication 1 ou 2, **caractérisé en ce que** l'entraînement du rétracteur est un entraînement pyrotechnique comportant un boîtier (26), relié à un corps de l'arbre (25) portant la ceinture de sécurité (13) et constituant le deuxième composant, et comportant au moins un élément d'entraînement constituant le premier composant, monté dans le boîtier (26), agissant sur un arbre d'entraînement axial portant l'élément de blocage (17) et recevant un gaz, produit par un générateur de gaz (29) lors du déclenchement de l'entraînement du rétracteur.

6. Enrouleur de ceinture de sécurité selon la revendication 5, **caractérisé en ce que** l'élément d'entraînement est formé par un piston (32) vers lequel afflux le gaz.

7. Enrouleur de ceinture de sécurité selon la revendication 6, **caractérisé en ce qu'**il est prévu respectivement un piston (32) en agencement symétrique de part et d'autre de l'arbre d'entraînement.

8. Enrouleur de ceinture de sécurité selon la revendication 6 ou 7, **caractérisé en ce que** l'arbre d'entraînement et le piston (32) sont couplés l'un à l'autre par des dentures engrenant l'une dans l'autre, de telle sorte que le mouvement linéaire du piston (32) est transformé en mouvement de rotation de l'arbre d'entraînement en cas de déclenchement de l'entraînement du rétracteur.

9. Enrouleur de ceinture de sécurité selon la revendication 6 ou 7, **caractérisé en ce qu'**une bande (33) guidée au-dessus du piston (32) est enroulée sur l'arbre d'entraînement et est fixée contre le boîtier (26) de telle sorte que le mouvement linéaire du piston entraîne un déroulement de la bande (33) de l'arbre d'entraînement et donc une rotation du boîtier (26) par rapport à l'arbre d'entraînement fixe.

10. Enrouleur de ceinture de sécurité selon la revendication 5, **caractérisé en ce qu'**une bande (33) est enroulée sur l'arbre d'entraînement et est fixée, moyennant la formation d'une chambre bombée dans le sens d'afflux du gaz, étroitement contre le boîtier (26), de telle sorte que l'afflux du gaz sur la bande (33) entraîne un déroulement de la bande (33) de l'arbre d'entraînement et donc une rotation du boîtier (26) par rapport à l'arbre d'entraînement fixe.

11. Enrouleur de ceinture de sécurité selon l'une quelconque des revendications 5 à 10 comportant un dispositif de limitation des forces, **caractérisé en ce que** l'arbre d'entraînement est réalisé sous la forme d'une barre de torsion (20) intérieure, qui est actionnée au niveau de son extrémité associée à l'entraînement du rétracteur par l'élément d'entraînement et est reliée au niveau de son extrémité opposée avec une tête profilée (21) portant l'élément de blocage (17), le corps d'arbre (25) étant relié à la tête profilée (21) par l'intermédiaire de structures destinées à la rupture.

12. Enrouleur de ceinture de sécurité selon l'une quelconque des revendications 5 à 11, **caractérisé en ce que** le générateur de gaz (29) est monté sur un cache (28) fixe de l'enrouleur de ceinture de sécurité et s'engage avec sa zone d'évacuation du gaz (34) dans un espace de distribution du gaz (30) formé dans le boîtier de l'entraînement du rétracteur.
